(19) **Europäisches Patentamt / European Patent Office / Office européen des brevets**

(11) **EP 1 975 873 A2**

(12) # EUROPEAN PATENT APPLICATION

(43) Date of publication:
**01.10.2008 Bulletin 2008/40**

(51) Int Cl.:
***G06T 7/00*** $^{(2006.01)}$

(21) Application number: **08005693.0**

(22) Date of filing: **26.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **26.03.2007 JP 2007080172**

(71) Applicants:
• **Funai Electric Co., Ltd.**
**Daito-shi,**
**Osaka 574-0013 (JP)**
• **Osaka University**
**Suita-shi**
**Osaka 565-0871 (JP)**

(72) Inventors:
• **Tanida, Jun**
**Suita-shi**
**Osaka 565-0871 (JP)**
• **Toyoda, Takashi**
**Daito-shi**
**Osaka 574-0013 (JP)**
• **Nakao, Yoshizumi**
**Daito-shi**
**Osaka 574-0013 (JP)**
• **Masaki, Yasuo**
**Daito-shi**
**Osaka 574-0013 (JP)**

(74) Representative: **Grünecker, Kinkeldey,**
**Stockmair & Schwanhäusser**
**Anwaltssozietät**
**Leopoldstrasse 4**
**80802 München (DE)**

(54) **Three-dimensional object imaging device**

(57)    A three-dimensional object imaging device comprises a compound-eye imaging unit and an image reconstructing unit for reconstructing an image of a three-dimensional object based on multiple unit images captured by the imaging unit. Based on the unit images obtained by the imaging unit, the image reconstructing unit calculates a distance (hereafter "pixel distance") between the object and the imaging unit for each pixel forming the unit images, and rearranges the unit images pixel-by-pixel on a plane at the pixel distance to create a reconstructed image. Preferably, the image reconstructing unit sums s a high-frequency component reconstructed image created from the multiple unit images with a lower noise low-frequency component unit image selected from low-frequency component unit images created from the multiple unit images so as to form a reconstructed image of the three-dimensional object. This makes it possible to obtain a reconstructed image with high definition easily by a simple process.

FIG. 1

**Description**

**BACKGROUND OF THE INVENTION**

**1. Field of the Invention**

The present invention relates to a three-dimensional object imaging device, and more particularly to a three-dimensional object imaging device which reconstructs an image of a three-dimensional object from multiple unit images captured by compound-eye imaging means.

**2. Description of the Related Art**

A device is known which reconstructs a single image by image processing from multiple unit images captured by a compound-eye camera having multiple microlenses (refer, for example to Japanese Laid-open Patent Publication 2005-167484). The compound-eye camera has an advantage that it can be manufactured to be thin, and also can obtain a bright image easily. However, it also has a disadvantage that the definition of each captured unit image is low. In order to improve the definition of the images in the image processing to reconstruct a single image from the multiple unit images, various methods such as arithmetic mean, pseudo-inverse matrix and pixel rearrangement have been developed. The arithmetic mean is a method to use the center of gravity of each unit image as a reference to superimpose the images. On the other hand, the pseudo-inverse matrix is a method to use vectors for expressing an object to be imaged and unit images, and to use a matrix for describing a point image distribution function of an optical system, so as to mathematically calculate an inverse matrix of the point image distribution function, thereby forming a reconstructed image.

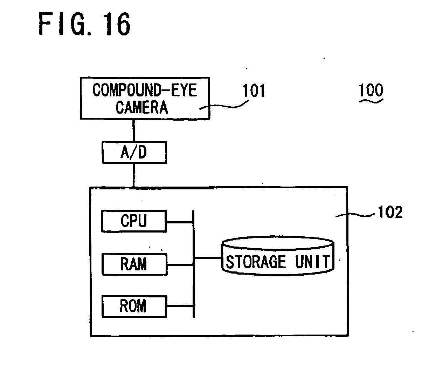

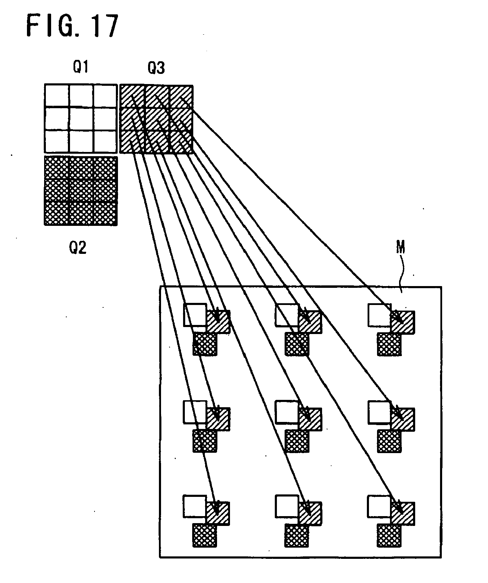

Japanese Laid-open Patent Publication 2005-167484 discloses a pixel rearrangement method which is one of the methods for reconstructing a single image with high definition from multiple unit images. Now, a brief description of an image forming device described in Japanese Laid-open Patent Publication 2005-167484 will be made with reference to FIG. 16 and FIG 17, in which FIG 16 is a schematic block diagram of an image forming device shown in this patent publication, while FIG 17 is a schematic view showing a process performed by the image forming device to reconstruct an image. As shown in FIG 16, an image forming device 100 described therein is composed of a compound-eye camera 101 having multiple optical lenses and a processor 102 for processing images captured by the compound-eye camera 101.

As shown in FIG 17, the processor 102 rearranges, in the same area M, pixels of unit images Q1, Q2, Q3 captured by the compound-eye camera 101 with parallax between the pixels of the unit images Q1, Q2, Q3 due to the difference in position in the multiple optical lenses, such that the pixels of each of the unit images Q1, Q2, Q3 are slightly shifted from those of the others by an amount corresponding to a shift amount (shift in relative position between the respective unit images) so as to correct the parallax therebetween. More specifically, to rearrange the pixels of the respective unit images Q1, Q2, Q3 in the same area M, the image forming device 100 calculates the shift amount based on a correlation function among the unit images Q1, Q2, Q3.

In this known device or method, there are problems to be solved. The image forming device shown in Japanese Laid-open Patent Publication 2005-167484 uses the pixel rearrangement method to reconstruct a two-dimensional image from multiple unit images of an object, and makes it possible to obtain reconstructed images with higher definition than by using the arithmetic mean method, the pseudo-inverse matrix method or the like. However, in order to reconstruct the two-dimensional image in this device, each pixel of the multiple unit images is rearranged on a rearrangement plane which is a fixed plane set at a predetermined distance (position of the object as originally placed) from the compound-eye camera.

Accordingly, if the object to be captured is a three-dimensional object with a depth, it is difficult to obtain a reconstructed image with high definition. Further, this device has a disadvantage that it can be used only if the distance from the compound-eye camera to the object is known. Note that this Japanese Laid-open Patent Publication 2005-167484 describes, as a second invention, the derivation of the distance between an object and a compound-eye camera from a shift amount and known parameters such as lens-to-lens distance and lens focal length of the compound-eye camera. However, it has a problem that various parameter values are required to be obtained in advance in a process other than the imaging process, and moreover that it does not disclose a specific method of deriving the distance.

On the other hand, there is a known three-dimensional shape extraction device which derives a distribution of distances to an object (to be imaged) based on multiple images captured by a camera moving relative to the object, and which creates a two-dimensional image based on the derived distance distribution (refer, for example, to Japanese Laid-open Patent Publication Hei 9-187038). However, the device described in Japanese Laid-open Patent Publication Hei 9-187038 uses a single-eye camera as imaging means rather than a compound-eye camera, in which a shutter is opened and closed multiple times as the single-eye camera moves so as to obtain multiple images from different view points. Thus, the distance between the object and the imaging means varies each time the image is captured, so that it is not possible to obtain a reconstructed image of the object with high definition.

There are other known methods or devices. For example, Japanese Patent 3575178 discloses a method to derive a distance to an object (to be captured) by using parallax between images of the object based on the principle of triangulation so as to detect an existence range of the object. Further, Japanese Laid-open Patent Publication 2001-167276 discloses an imaging device to use a distance sensor for measuring a distance distribution such that an image area of an image of an object captured by a CCD (Charge Coupled Device) imaging device is divided for each distance based on the measured distance distribution, so as to create a predetermined synthetic image. However, according to such method and device disclosed in these patent publications, a reconstructed image of an object with high definition cannot be obtained easily by a simple process.

## SUMMARY OF THE INVENTION

An object of the present invention is to provide a three-dimensional object imaging device to reconstruct an image of the three-dimensional object from multiple unit images captured by compound-eye imaging means, in which a reconstructed image with high definition can be obtained easily by a simple process.

This object is achieved according to the present invention by a three-dimensional object imaging device comprising compound-eye imaging means and image reconstructing means for reconstructing an image of a three-dimensional object based on multiple unit images with pixels captured by the compound-eye imaging means, wherein the image reconstructing means comprises: distance calculating means for calculating a distance (hereafter referred to as "pixel distance") between the three-dimensional object and the compound-eye imaging means for each pixel forming the unit images; and reconstructed image creating means for creating a reconstructed image by rearranging the multiple unit images pixel-by-pixel on a plane located at the pixel distance.

The three-dimensional object imaging device as thus constructed according to the present invention makes it possible to calculate the pixel distance between the three-dimensional object and the compound-eye imaging means for each pixel of the multiple unit images captured by the compound-eye imaging means, while each unit image is rearranged pixel-by-pixel on the plane located at the pixel distance. Thus, a reconstructed image with high definition can be obtained easily by a simple process.

The three-dimensional object imaging device can be designed so that the distance calculating means comprises: temporary reconstructed image creating means for (a) performing a temporary reconstructed image creating process to create a temporary reconstructed image of the multiple unit images on each of multiple planes located at predetermined distances from the pixels of the unit images in which for a first one (hereafter referred to as "first temporary distance") of the predetermined distances, the multiple unit images are rearranged pixel-by-pixel on a first one (hereafter referred to as "first temporary distance plane") of the planes located at the first temporary distance, and (b) repeating the temporary reconstructed image creating process for the other planes (hereafter referred to as "subsequent temporary distance planes") located at the other predetermined distances (hereafter referred to as "subsequent temporary distances"), so as to create multiple temporary reconstructed images; reverse projection image creating means for (a) performing a reverse projection image creating process to create reverse projection images, corresponding to the respective unit images and corresponding also in number to the unit images, on each of the first and subsequent temporary distance planes in which for the first temporary distance, each of the unit images is reversely projected pixel-by-pixel onto the first temporary distance plane, and (b) repeating the reverse projection image creating process for the subsequent temporary distance planes located at the subsequent temporary distances, so as to create multiple reverse projection images for each of the unit images; comparing means for comparing the first and subsequent temporary distances based on the temporary reconstructed image and the reverse projection images of the respective unit images on each of the first and subsequent temporary distance planes; and pixel distance determining means for determining the pixel distance based on the comparison by the comparing means.

Preferably the reconstructed image creating means comprises: high-frequency component unit image creating means for creating multiple high-frequency component unit images by extracting a high-frequency component from each of the multiple unit images; low-frequency component unit image creating means for creating multiple low-frequency component unit images by extracting a low-frequency component from each of the multiple unit images; high-frequency component reconstructed image creating means for creating a high-frequency component reconstructed image by rearranging, on the plane located at the pixel distance, the multiple high-frequency component unit images created by the high-frequency component unit image creating means; image selecting means for selecting a low-frequency component unit image with lower noise from the multiple low-frequency component unit images created by the low-frequency component unit image creating means; low-frequency component reverse projection image creating means for creating a low-frequency component reverse projection image by reversely projecting pixel-by-pixel the low-frequency component unit image selected by the image selecting means onto the plane located at the pixel distance; and summing means for summing the high-frequency component reconstructed image created by the high-frequency component reconstructed image creating means with the low-frequency component reverse projection image created by the low-frequency component reverse projection image creating means so as to obtain the reconstructed image.

The three-dimensional object imaging device as thus constructed divides the multiple unit images captured by the compound-eye imaging means into high-frequency components and low-frequency components. Both components are used to create a high-frequency component reconstructed image and low-frequency component reverse projection images. Then, the high-frequency component reconstructed image is summed with one of the low-frequency component reverse projection images which has the lowest noise, so as to obtain a reconstructed image. Thus, this three-dimensional object imaging device can reduce the effect of e.g. limb darkening or low-frequency noise which is likely to be generated by using the compound-eye imaging means, making it possible to obtain a reconstructed image with a further higher definition.

While the novel features of the present invention are set forth in the appended claims, the present invention will be better understood from the following detailed description taken in conjunction with the drawings.

## BRIEF DESCRIPTION OF THE DRAWINGS

The present invention will be described hereinafter with reference to the annexed drawings. It is to be noted that all the drawings are shown for the purpose of illustrating the technical concept of the present invention or embodiments thereof, wherein:

FIG 1 is a schematic view, partly in block form, of a three-dimensional object imaging device according to a first embodiment of the present invention;

FIG. 2A is a schematic perspective view for explaining a positional relationship between an object, an optical lens array and unit images in the three-dimensional object imaging device, while FIG. 2B is a schematic plan view for explaining a positional relationship between the object, the optical lens array and two unit images as representative examples of the unit images;

FIG 3 is a flow chart showing a process of creating a reconstructed image as performed by the three-dimensional object imaging device;

FIG. 4 is a flow chart showing a step of calculating a pixel distance as performed by the three-dimensional object imaging device;

FIG 5 is a schematic perspective view for explaining the principle of creating a reconstructed image in the three-dimensional object imaging device;

FIG 6 is an explanatory view for explaining the principle of creating the reconstructed image in the three-dimensional object imaging device;

FIG 7 is a schematic perspective view for explaining the principle of creating reverse projection images in the three-dimensional object imaging device;

FIG 8 is an explanatory view for explaining the principle of creating the reverse projection images in the three-dimensional object imaging device;

FIG 9 is an explanatory view for explaining a group of evaluation values stored in a memory;

FIG 10 is a schematic view showing an example of unit images captured by a compound-eye imaging unit in the three-dimensional object imaging device;

FIG. 11 is a schematic view showing an example of a reconstructed image when one temporary distance is set in the three-dimensional object imaging device;

FIG 12 is a schematic view showing an example of a distance image as derived in the three-dimensional object imaging device;

FIG 13 is a schematic view showing an example of a reconstructed image created based on the distance image in the three-dimensional object imaging device;

FIG 14 is a schematic perspective view for explaining the principle of creating a reconstructed image in the three-dimensional object imaging device with three three-dimensional objects;

FIG 15 is a flow chart showing a process of creating a reconstructed image as performed by a three-dimensional object imaging device according to a second embodiment of the present invention;

FIG 16 is a schematic block diagram of a conventional image forming device; and

FIG 17 is a schematic view showing a process performed by the conventional image forming device to reconstruct an image.

## DESCRIPTION OF THE PREFERRED EMBODIMENTS

Embodiments of the present invention, as best mode for carrying out the invention, will be described hereinafter with reference to the drawings. The present invention relates to a three-dimensional object imaging device. It is to be understood that the embodiments described herein are not intended as limiting, or encompassing the entire scope of, the present invention. Note that like parts are designated by like reference numerals, characters or symbols throughout the drawings.

(FIRST EMBODIMENT)

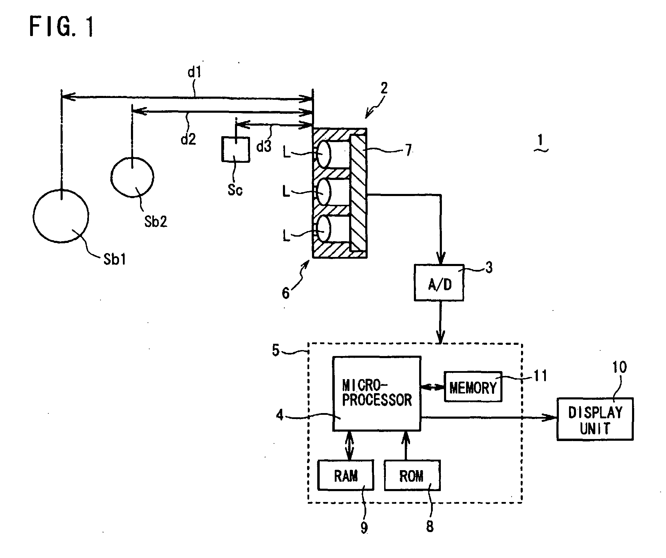

Referring to FIG. 1 to FIG 14, a three-dimensional object imaging device 1 according to a first embodiment of the present invention will be described. FIG 1 is a schematic view, partly in block form, of a three-dimensional object imaging device 1 of the present embodiment. As shown in FIG 1, the three-dimensional object imaging device 1 comprises: a compound-eye imaging unit 2 (claimed "compound-eye imaging means"); and an image reconstructing unit 5 (claimed "image reconstructing means") mainly composed of a microprocessor 4 for receiving, via an A/D (Analog-to-Digital) converter 3, image information captured by the compound-eye imaging unit 2, and for calculating, pixel-by-pixel, a distance (hereafter referred to as "pixel distance") from a three-dimensional object (to be imaged) to the compound-eye imaging unit 2 (more specifically optical lens array 6 described below) based on the received and digitized image information, and further for creating a reconstructed image based on the calculated pixel distances.

The microprocessor 4 serves as claimed "distance calculating means", "reconstructed image creating means", "temporary reconstructed image creating means", "reverse projection image creating means", "comparing means", "pixel distance determining means", "high-frequency component unit image creating means", "low-frequency component unit image creating means", "high-frequency component reconstructed image creating means", "image selecting means", "low-frequency component reverse projection image creating means" and "summing means". Two different-sized spherical objects Sb1, Sb2 and one cubic object Sc are placed at different distances d1, d2, d3 in front of the compound-eye imaging unit 2 (more specifically optical lens array 6), respectively.

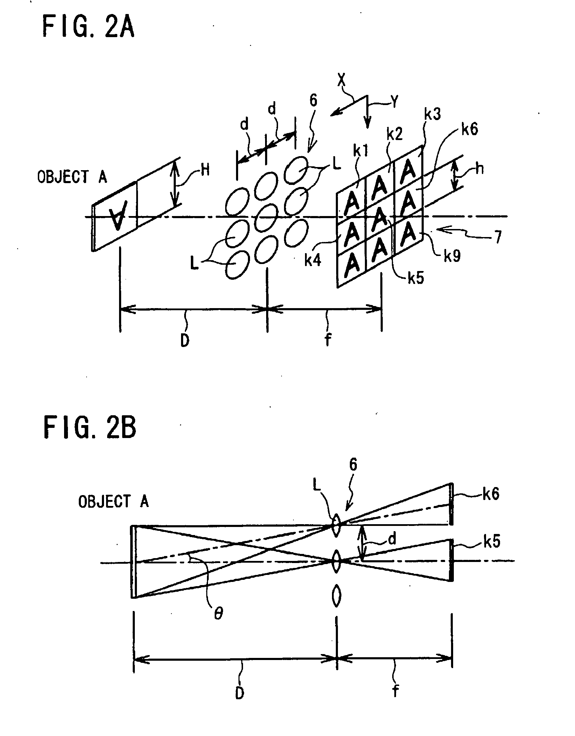

FIG 2A is a schematic perspective view for explaining a positional relationship between an object A, an optical lens array 6 and unit images k1 to k9. Referring to FIG 1 and FIG 2A, the compound-eye imaging unit 2 comprises: an optical lens array 6 formed of nine optical lenses L (the number of optical lenses L which is nine in the present embodiment is actually preferred to be larger) arranged in a matrix array of three rows and three columns on the same plane; and a solid-state imaging element 7 formed of a CMOS (Complementary Metal Oxide Semiconductor) image sensor for capturing nine unit images k1 to k9 formed at the focal points of the respective optical lenses L. As shown in FIG 1, the image reconstructing unit 5 comprises: a microprocessor 4; a ROM (Read Only Memory) 8 storing e.g. an operating program for the microprocessor 4; a RAM (Random Access Memory) 9 for temporarily storing e.g. image data; and a large capacity memory 11. The microprocessor 4 creates a reconstructed image based on image information of the unit images k1 to k9 received from the compound-eye imaging unit 2, and displays the reconstructed image on a display unit 10 such as a liquid crystal panel.

FIG 2B is a schematic plan view for explaining a positional relationship between the object A, the optical lens array 6 and two unit images k5 and k6 as representative examples of the unit images k1 to k9. Referring now to FIGs. 2A and 2B, the relationships, including the positional relationship, between the optical lens array 6, the object A placed in front of the optical lens array 6, and the unit images k1 to k9 formed on the solid-state imaging element 7 by the respective lenses L will be described. For convenience of description, the object A is assumed to be a plate placed parallel to XY plane (two-dimensional plane) in FIG 2A and having an inverted letter "A" drawn thereon. The optical lens array 6 and the solid-state imaging element 7 are also placed parallel to the XY plane.

The nine optical lenses L respectively collect light from the object A on the solid-state imaging element 7 to form nine unit images k1 to k9 in a matrix of three rows and three columns. Here, the relation $h = H \times f/D$ holds where D is the distance from the object A to the optical lens array 6, f is the distance (focal length) from the optical lens array 6 to the solid-state imaging element 7, H is the vertical length (size) of the object A, and h is the vertical length (size) of each of the unit images k1 to k9. Actually, the focal length f of the compound-eye imaging unit 2 has an extremely small value, so that the size h of each unit image also has a small value.

Further, the unit images k1 to k9 are images having parallaxes therebetween. For example, the unit image k5 formed by the central optical lens L is different in view point (shifted left and right) from the unit images k4, k6 each by a distance d between the optical lenses L, since the unit images k4, k6 are formed by the optical lenses L which are positioned left and right of the central optical lens L at the distance d. As apparent from FIG. 2B, which representatively shows the unit image k6 relative to the unit image k5, the unit images k4, k6 have a parallax angle θ left and right relative to each other from the unit image k5, satisfying the relation $\tan \theta = d/D$. The nine unit images k1 to k9 have parallaxes based on this relation. Due to the parallax effect, the image of the object A is differently shifted in position in the nine unit images k1 to k9. As will be described later, the parallax effect is corrected when rearranging the unit images k1 to k9 to form a reconstructed image.

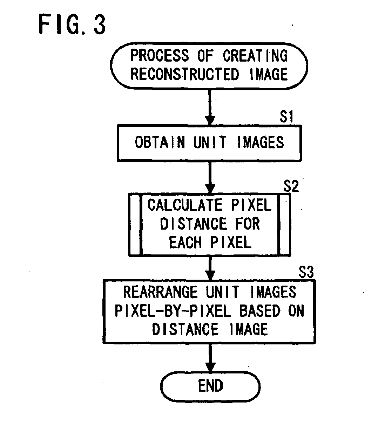

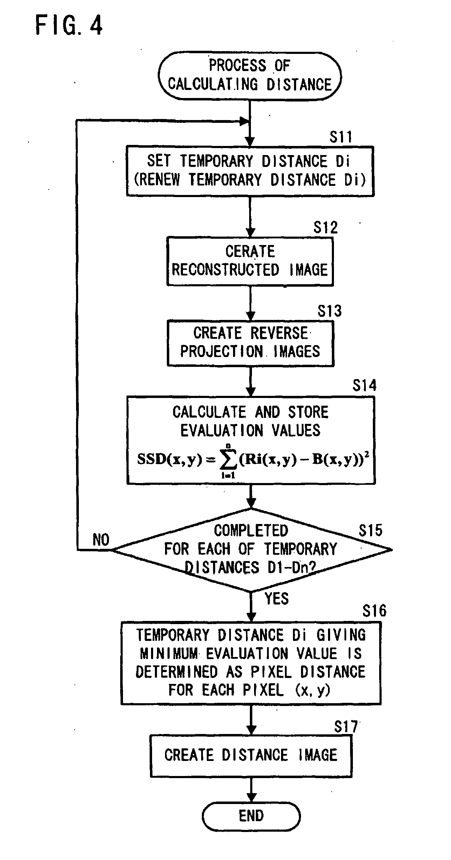

Next, referring to the flow charts of FIG 3 and FIG 4, the process of creating a reconstructed image as performed by the microprocessor 4 in the three-dimensional object imaging device 1 of the first embodiment will be described. As shown by the flow chart of FIG 3, the microprocessor 4 obtains nine unit images k1 to k9 as digital image information from those captured by the solid-state imaging element 7 (S1), and calculates a pixel distance for each pixel of each of the unit images k1 to k9 (to create a distance image as described in detail later) (S2), and further rearranges the unit images k1 to k9 pixel-by-pixel based on the distance image so as to create a reconstructed image (S3). The step of calculating the pixel distance in S2 above will be described in detail below referring to the flow chart of FIG 4 and FIG 5 to FIG 9. Note that the object to be imaged is assumed here as a two-dimensional object A placed at an unknown distance D (refer to FIG 2) for simplicity of description, and that a three-dimensional object with a depth can be considered as a number of continuous two-dimensional objects placed at different unknown distances (D).

First, the microprocessor 4 reads a first temporary distance D1 (first predetermine distance) from multiple preset temporary distances D1 to Dn, and sets the temporary distance D1 (claimed "first temporary distance") (S11). Here, the temporary distances D1 to Dn are candidates of the distance D from the optical lens array 6 to the object, and are prepared or stored in advance in the ROM 8 or the memory 11 as discrete values. An object (to be captured) located farther from the optical lens array 6 gives a smaller parallax angle $\theta$, making it more difficult to determine the distance based on the shift between the unit images. Thus, actually, a relatively large number of temporary distances are set at relatively short intervals for a closer range (closer distance area) to the optical lens array 6, whereas a relatively small number of temporary distances are set at relatively long intervals for a farther range (farther distance area) from the optical lens array 6. For example, the temporary distances D1 to Dn can be discrete values u defined by the exponential function $u = a^v$.

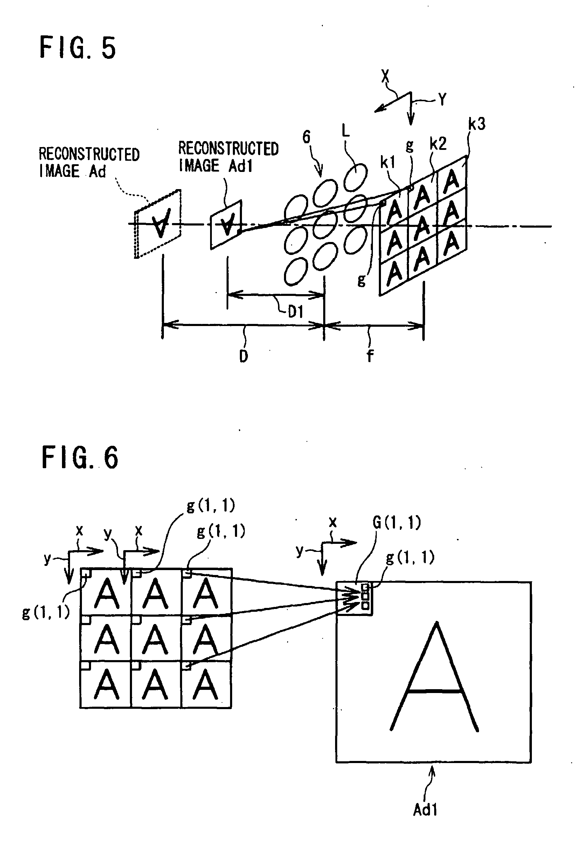

Next, based on the temporary distance D1 as set above, the microprocessor 4 creates one reconstructed image from the nine stored unit images k1 to k9 (S12). The process of creating the reconstructed image can be performed by a similar image rearrangement method as described in Japanese Laid-open Patent Publication 2005-167484. Referring now to FIG 5 and FIG 6, the process of creating a reconstructed image will be described. FIG 5 and FIG 6 are a schematic perspective view and an explanatory view for explaining the principle of creating the reconstructed image in the three-dimensional object imaging device 1. As shown in FIG 5 and FIG 6, the microprocessor 4 rearranges pixel-by-pixel the nine unit images k1 to k9 into one reconstructed image Ad1 on a plane (hereafter referred to as "temporary distance plane" corresponding to claimed "first temporary distance plane") located at the temporary distance D1 from the optical lens array 6 in a manner that the digital values of pixels g positioned at the same coordinate position on the xy coordinate plane of each of the unit images k1 to k9 are projected onto an area G (corresponding to each pixel g) of the temporary distance plane. In the description below, the coordinate of each of the unit images k1 to k9 is represented by the xy coordinate in order to distinguish from the two-dimensional XY plane.

More specifically, the microprocessor 4 creates the reconstructed image Ad1 as follows. The microprocessor 4 performs a first pixel rearrangement step such that the pixels g(1,1) positioned at a coordinate (x=1, y=1) of the respective unit images k1 to k9 are rearranged on the temporary distance plane located at the temporary distance D1, correcting the parallax in the unit images k1 to k9 based on the relation tan $\theta$ = d/D described above, which can be correspondingly expressed by tan $\theta$1 = d/D1 here, as if the lights from the object A collected on the solid-state imaging element 7 along the light collection paths via respective optical lenses L to form the unit images k1 to k9 return along the same light collection paths to the object A, respectively. Next, the microprocessor performs a second pixel rearrangement step such that the pixels g(2,1) positioned at a coordinate (x=2, y=1) of the respective unit images k1 to k9 are rearranged on the temporary distance plane located at the temporary distance D1, correcting the parallax in the unit images k1 to k9 in the same manner as for the pixels g(1,1). By repeating the subsequent pixel rearrangement steps until all the pixels g(x,y) are rearranged on the temporary distance plane in this way, the reconstructed image Ad1 is created.

In the reconstructed image as thus created, an area G(x,y) corresponding to the pixels g(x,y) is formed as shown in FIG 6. More specifically, the image in the area G(x,y) is formed by the pixels g(x,y) reflecting the parallax correction based on the parallax angle $\theta$1 of the temporary distance D1 (tan $\theta$1 = d/D1) to compensate the shift amount (parallax) in the unit images k1 to k9. The thus created reconstructed image Ad1 is stored e.g. in the memory 11. Note that FIG 5 shows a reconstructed image Ad by dashed lines, which is reconstructed on a plane located at the unknown distance D. If the temporary distance D1 is equal to the unknown distance D, the reconstructed image as obtained has a high definition, while if the temporary distance is shifted from the unknown distance D, the reconstructed image Ad1 has a lower definition than the reconstructed image Ad.

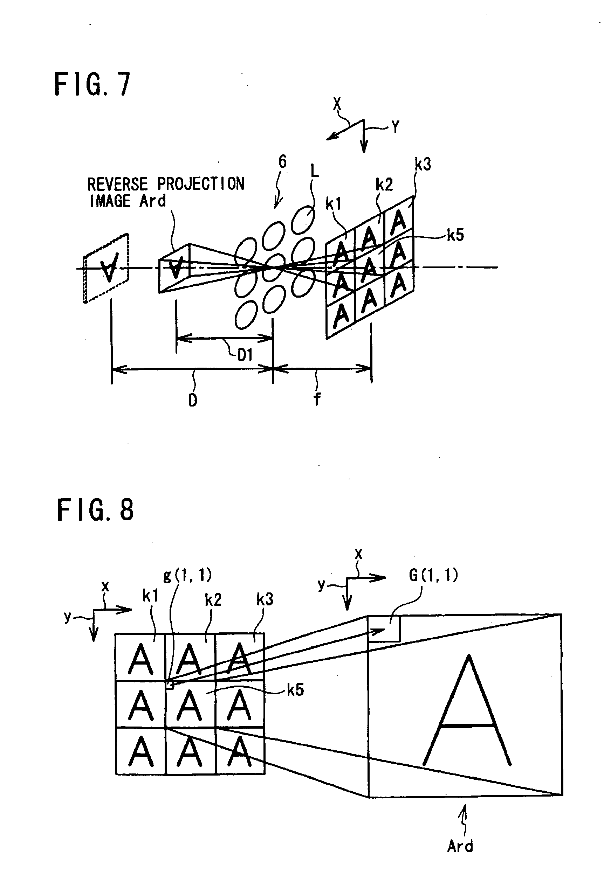

Next, based on the temporary distance D1, the microprocessor 4 creates nine reverse projection images from the nine stored unit image k1 to k9 (S13). Referring to FIG 7 and FIG 8, the process of creating the reverse projection images will be described. FIG 7 and FIG 8 are a schematic perspective view and an explanatory view for explaining the principle of creating the reverse projection images in the three-dimensional object imaging device 1, in which the central unit image k5 is used as a representative example. As shown in FIG. 7 and FIG 8, the microprocessor 4 creates a reverse projection image Ard of the unit image k5 on the temporary distance plane located at the temporary distance D1 from the optical lens array 6 in a manner that the digital values of pixels g are projected pixel-by-pixel onto the temporary distance plane.

More specifically, the microprocessor 4 creates the reverse projection image Ard of the unit image k5 as follows. As shown in FIG 8, the microprocessor 4 performs a first pixel projection step such that the pixel g(1,1) positioned at a coordinate (x=1, y=1) of the unit image k5 is enlarged to the size of the reconstructed image Ad1 and projected onto the temporary distance plane located at the temporary distance D1, as if the light from the object A collected on the solid-state imaging element 7 along the light collection path via the optical lens L to form the unit image k5 returns along the same light collection path toward the object A. Next, the microprocessor 4 performs a second pixel projection step such that the pixel g(2,1) positioned at a coordinate (x=2, y=1) of the unit image k5 is enlarged and projected onto the temporary distance plane in the same manner as for the pixel g(1,1).

By repeating the subsequent pixel projection steps until all the pixels g(x,y) of the unit image k5 are enlarged and projected onto the temporary distance plane in this way, the reverse projection image Ard is created. In the thus created reverse projection image Ard, an area G(x,y) which corresponds to the pixel g(x,y) is formed of the one pixel g(x,y). The microprocessor 4 repeats the process of creating the projection image as described above for all the unit images k1 to k9 so as to create nine reverse projection images Ard which will be designated hereinafter by Ard1 to Ard9 although not shown. The reverse projection image of the unit image k5 as described above can be designated by Ard5. The nine reverse projection images Ard1 to Ard9 as thus created are stored e.g. in the memory 11.

Next, based on the one reconstructed image Ad1 and the nine reverse projection images Ard1 to Ard9 as created above, the microprocessor 4 calculates evaluation values for each pixel on the xy coordinate plane (S14). More specifically, an evaluation value SSD(x,y) is given by the following equation:

$$SSD(x,y) = \sum_{i=1}^{n} (Ri(x,y) - B(x,y))^2$$

In this equation, i represents the number of a unit image (as in i-th unit image ki), and Ri(x,y) represents the digital value of a pixel G at an xy coordinate position of a reverse projection image Ardi of the i-th unit image ki, while B(x,y) represents the digital value of a pixel G at an xy coordinate position of the reconstructed image Ad1. and n is the number of unit images which is 9 (nine) in the present embodiment.

More specifically, the microprocessor 4 calculates the square of the difference between the reconstructed image Ad1 and the reverse projection image Ard1 of the first unit image k1 for each pixel g on the xy coordinate plane so as to calculate a deviation of the reverse projection image Ard1 of the first unit image k1 from the reconstructed image Ad1. In the same way, the microprocessor 4 calculates the square of the difference between the reconstructed image Ad1 and the reverse projection image Ard2 of the second unit image k2 so as to calculate a deviation of the reverse projection image Ard2 of the second unit image k2 from the reconstructed image Ad1. By repeating the subsequent calculations in this way for all the reverse projection images Ard3 to Ard9, the microprocessor 4 obtains nine deviations. The microprocessor 4 sums the nine deviations to calculate the evaluation value SSD(x,y), which is then stored e.g. in the memory 11.

Next, the microprocessor 4 determines whether the steps S11 to S14 for each of the temporary distances D1 to Dn (claimed "subsequent temporary distances" for those other than the "first temporary distance") as set in S11 have been completed, using temporary distance planes (claimed "subsequent temporary distance planes" for those other than the "first temporary distance plane" for D1) (S15). If not completed (NO in S15), the process goes back to the step S11 again to renew the temporary distance Di (S11). Normally, the process is performed in order of magnitude of the temporary distance, so that the renewal of the temporary distance Di is normally made from Di to D(i+1). In this case, a reconstructed image Ad(i+1) is created at a location farther from the optical lens array 6 than the reconstructed image Adi (S12).

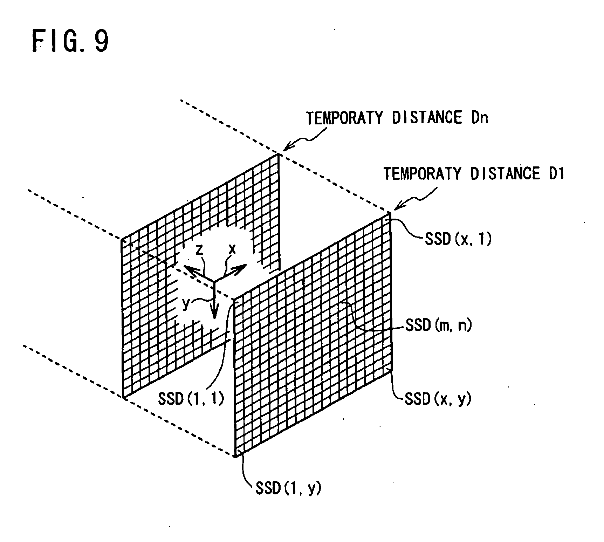

Then, nine reverse projection images Ard1 to Ard9 for the temporary distance D(i+1) are created on a temporary distance plane (one of the claimed "subsequent temporary distance planes") (S13). Based on the nine reverse projection images Ard1 to Ard9, an evaluation value SSD(x,y) for the temporary distance D(i+1) is calculated, and is stored e.g. in the memory 11. The microprocessor 4 repeats these steps until all the steps S11 to S14 for all the temporary distances D1 to Dn are completed, so as to obtain n evaluation values SSD(x,y) corresponding in number to the temporary distances D1 to Dn, and to store the group of n evaluation values SSD(x,y) e.g. in the memory 11. FIG. 9 schematically shows the group of evaluation values stored e.g. in the memory 11, storing the evaluation values SSD corresponding to the respective xy coordinate positions shown in FIG 9.

Thereafter, if the microprocessor 4 determines that the steps S11 to S14 for each of the temporary distances D1 to Dn have been completed to calculate the evaluation values SSD(x,y) for all the temporary distances D1 to Dn (YES in S15), the microprocessor 4 determines which one of the temporary distances D1 to Dn gives a minimum evaluation value SSD(x,y) among the evaluation values SSD(x,y) for the pixels g(x,y) at each xy coordinate position. The microprocessor 4 also determines that the temporary distance Di giving the minimum evaluation value SSD(x,y) is the pixel distance D for the pixel g(x,y) at each xy coordinate position (S16). In other words, the microprocessor 4 searches, in the z direction, the evaluation values SSD for each pixel g on the xy coordinate plane from the group of evaluation values shown in FIG 9 so as to detect a temporary distance Di as a pixel distance D for each pixel g on the xy coordinate plane. Finally, the microprocessor 4 creates a distance image PD which is formed of a difference in lightness/darkness of screen as obtained by converting the pixel distance D determined in S16 for each pixel g on the xy coordinate plane to a difference in lightness/darkness of screen (S17).

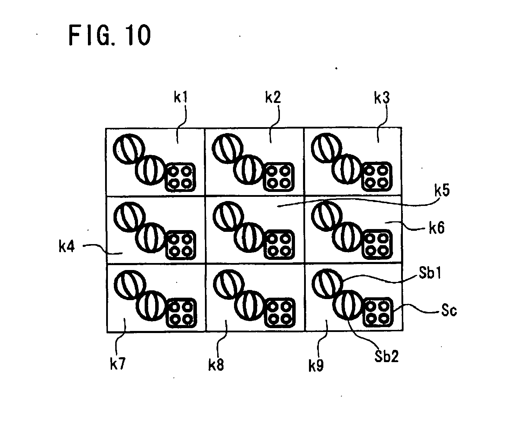

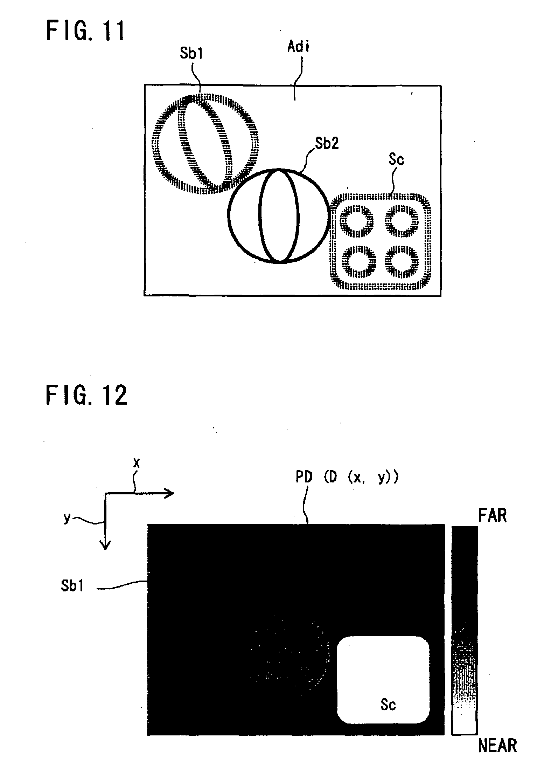

FIG 10 is a schematic view showing an example of the unit images k1 to k9 captured by the compound-eye imaging unit 2 in the three-dimensional object imaging device 1, in which two spherical objects Sb1, Sb2 and one cubic object Sc placed at difference distances d1, d2, d3 from the compound-eye imaging unit 2 (optical lens array 6) as shown in FIG 1 are used as three-dimensional objects to be captured. FIG 11 is a schematic view showing an example of a reconstructed image Adi when one temporary distance Di is set in the three-dimensional object imaging device 1, in which d1 of the spherical object Sb1 is 53 cm, d2 of the spherical object Sb2 is 23 cm, and d3 of the cubic object Sc is 3 cm while the temporary distance Di is 23 cm. Further, FIG 12 is a schematic view showing an example of a distance image PD as derived in step S17 described above in the three-dimensional object imaging device 1.

The reconstructed image Adi in FIG 11 shows a case where the temporary distance Di is set at a position equivalent to the distance (23 cm) of the spherical object Sb2 from the compound-eye imaging unit 2 (optical lens array 6). Thus, the image of the spherical object Sb2 is reconstructed with high definition, whereas the images of the spherical object Sb1 and the cubic object Sc are reconstructed with low definition. Further, in the distance image PD shown in FIG 12, the spherical object Sb1 which is located far is displayed in a dark color representing d1=53 cm. On the other hand, the spherical object Sb2 located at an intermediate position is displayed in a light color representing d2=23 cm, while the cubic object Sc located very near is displayed in a white color representing d3=3 cm. Thus, the color lightness/darkness represents the pixel distance $D(x,y)$ of each pixel on the xy coordinate plane.

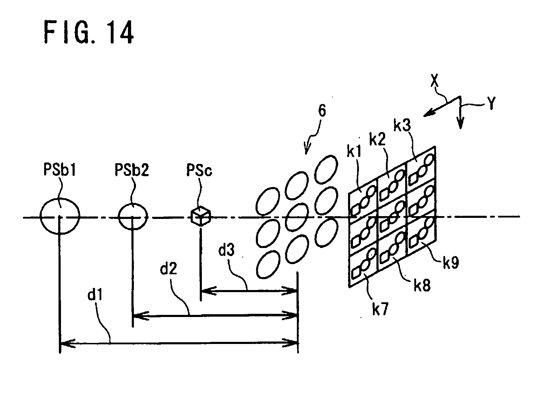

Next, based on the distance image PD as thus derived above, the microprocessor 4 rearranges the nine unit images k1 to k9 on a temporary distance plane located at a specific position (pixel distance) for each pixel g so as to create a reconstructed image (S3). This reconstruction process will be described below with an example in which the three objects Sb1, Sb2 and Sc described above are used as three-dimensional objects by neglecting the difference in pixel distance among the pixels forming each of the objects Sb1, Sb2 and Sc, namely by hypothetically assuming that each of the objects Sb1, Sb2 and Sc is a two-dimensional object having no depth. FIG 14 is a schematic perspective view for explaining the principle of creating a reconstructed image in the three-dimensional object imaging device 1 with the three three-dimensional objects.

As shown conceptually in FIG 14, the microprocessor 4 of the present embodiment rearranges an image PSb1 of the spherical object Sb1 on a temporary distance plane located at distance d1 (pixel distance) of 53 cm from the optical lens array 6 based on the distance image PD, and further rearranges an image PSb2 of the spherical object Sb2 on a temporary distance plane located at distance d2 (pixel distance) of 23 cm from the optical lens array 6 based on the distance image PD, while also rearranging an image PSc of the cubic object Sc on a temporary distance plane located at distance d3 (pixel distance) of 3 cm from the optical lens array 6 based on the distance image PD.

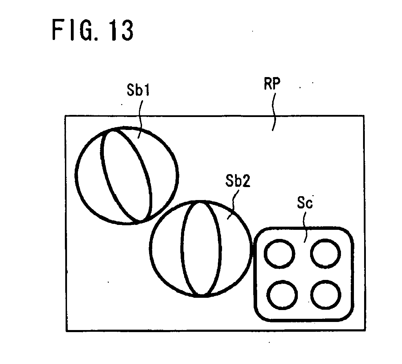

FIG 13 is a schematic view showing an example of a reconstructed image created based on the distance image PD in the three-dimensional object imaging device 1. Putting the above in other words, the microprocessor 4 rearranges each pixel of the unit images k1 to k9 (pixel-by-pixel) on a temporary distance plane located at a specific pixel distance $D(x,y)$ determined by the distance image PD so as to create a reconstructed image RP as shown in FIG 13. Thus, it can be said that in the reconstructed image RP as created above, the images of all the objects Sb1, Sb2 and Sc are properly focus-adjusted and reconstructed with high definition. The microprocessor 4 displays the thus reconstructed image RP on the display unit 10. Note that in the step of calculating the pixel distance in the present embodiment (S2), the pixel distance $D(x,y)$ is calculated based on the evaluation value SSD as calculated from the deviations between the reconstructed image Ad reconstructed from the unit images k1 to k9 and the reverse projection images Ard reversely projected from the unit images k1 to k9. However, another method can be used to calculate the pixel distance.

(SECOND EMBODIMENT)

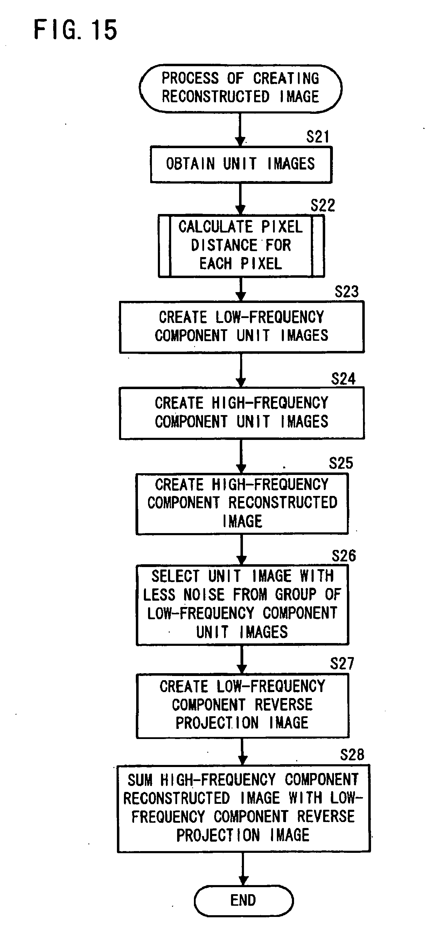

Next, referring to the flow chart of FIG 15, the process of creating a reconstructed image as performed by a microprocessor 4 in a three-dimensional object imaging device 1 according to a second embodiment of the present invention will be described. The three-dimensional object imaging device 1 of the second embodiment has the same structure as that of the first embodiment. The microprocessor 4 in the second embodiment performs steps S21 (step of obtaining unit images k1 to k9) and S22 (step of calculating a pixel distance $D(x,y)$ for each pixel to obtain a distance image PD) which are the same as steps S1 and S2 as performed in the first embodiment, so that a detailed description thereof is omitted here, and the process from step S23 onward will be described below.

The microprocessor 4 applies the unit images k1 to k9 obtained in S21 to a known smoothing filter to extract a low-frequency component of each unit image so as to create low-frequency component unit images k11 to k19 (S23). Next, the microprocessor 4 subtracts the low-frequency component unit images k11 to k19 from the original unit images k1 to k9 to create high-frequency component unit images kh1 to kh9, respectively (S24). The low-frequency component unit images k11 to k19 and the high-frequency component unit images kh1 to kh9 as thus created are stored e.g. in the memory 11. Based on the distance image PD obtained in the step of calculating the pixel distance (S22), the microprocessor 4 further rearranges pixel-by-pixel the high-frequency component unit images kh1 to kh9 on a temporary distance plane located at each pixel distance D(x,y) so as to create one high-frequency component reconstructed image (S25). Similarly as in the step of creating a reconstructed image in the first embodiment, the step S25 of creating a high-frequency component reconstructed image rearranges the unit pixels kh1 to kh9 on a temporary distance plane located at a specific pixel position D(x,y) for each pixel. The high-frequency component reconstructed image as thus created is stored e.g. in the memory 11.

Next, from low-frequency component unit images k11 to k19 as created in S23, the microprocessor 4 selects one low-frequency component unit image with lower noise such as one which has a lower brightness than a predetermined threshold value, or one which has a large gradation in the one low-frequency component unit image (S26). Generally, the optical lens array 6 of the compound-eye imaging unit 2 has a feature in the structure that limb or peripheral unit images (e.g. unit images k1, k3, k7 and k9) are darker than central unit images (e.g. unit image k5) which is called limb or peripheral darkening. Thus, normally in S26, the microprocessor 4 selects the brightest and low noise low-frequency component unit image such as k15 with reference to the brightness value, the degree of gradation and so on.

Thereafter, based on the distance image PD as obtained in the step of pixel distance calculation (S22), the microprocessor 4 reversely projects the thus selected low-frequency component unit image (e.g. k15) pixel-by-pixel onto a temporary distance plane located at the pixel distance D(x,y) so as to create a low-frequency component reverse projection image (S27). The thus created low-frequency component reverse projection image is stored e.g. in the memory 11. Finally, the microprocessor 4 reads the high-frequency component reconstructed image and the low-frequency component reverse projection image stored e.g. in the memory 11, and sums both images to form a reconstructed image (S28). Here, the microprocessor 4 can multiply a coefficient of 1 or larger with the digital value of each pixel of the high-frequency component reconstructed image in advance of the summing step in S28, so as to emphasize the high-frequency component reconstructed image, making it possible to sharpen the image.

As described in the foregoing, the three-dimensional object imaging device 1 of the second embodiment divides the multiple unit images k1 to k9 captured by the compound-eye imaging unit 2 into high-frequency components and low-frequency components. Both components are used to create a high-frequency component reconstructed image and low-frequency component unit images. Thereafter, the high-frequency component reconstructed image is summed with a low-frequency component reverse projection image created from one (e.g. k15) of the low-frequency component unit images which has the lowest noise, so as to obtain a reconstructed image. Thus, the three-dimensional object imaging device 1 can reduce the effect of e.g. limb darkening which is likely to be generated by using the compound-eye imaging unit 2, making it possible to obtain a reconstructed image with a further higher definition.

The present invention has been described above using presently preferred embodiments, but such description should not be interpreted as limiting the present invention. Various modifications will become obvious, evident or apparent to those ordinarily skilled in the art, who have read the description. Accordingly, the appended claims should be interpreted to cover all modifications and alterations which fall within the spirit and scope of the present invention.

## Claims

1. A three-dimensional object imaging device comprising compound-eye imaging means and image reconstructing means for reconstructing an image of a three-dimensional object based on multiple unit images with pixels captured by the compound-eye imaging means, wherein the image reconstructing means comprises:

   distance calculating means for calculating a distance (hereafter referred to as "pixel distance") between the three-dimensional object and the compound-eye imaging means for each pixel forming the unit images; and reconstructed image creating means for creating a reconstructed image by rearranging the multiple unit images pixel-by-pixel on a plane located at the pixel distance.

2. The three-dimensional object imaging device according to claim 1, wherein the distance calculating means comprises:

   temporary reconstructed image creating means for (a) performing a temporary reconstructed image creating process to create a temporary reconstructed image of the multiple unit images on each of multiple planes located at predetermined distances from the pixels of the unit images in which for a first one (hereafter referred to as "first temporary distance") of the predetermined distances, the multiple unit images are rearranged pixel-by-pixel on a first one (hereafter referred to as "first temporary distance plane") of the planes located at the first temporary distance, and (b) repeating the temporary reconstructed image creating process for the other planes (hereafter referred to as "subsequent temporary distance planes") located at the other predetermined distances (hereafter referred to as "subsequent temporary distances"), so as to create multiple temporary reconstructed images;

reverse projection image creating means for (a) performing a reverse projection image creating process to create reverse projection images, corresponding to the respective unit images and corresponding also in number to the unit images, on each of the first and subsequent temporary distance planes in which for the first temporary distance, each of the unit images is reversely projected pixel-by-pixel onto the first temporary distance plane, and (b) repeating the reverse projection image creating process for the subsequent temporary distance planes located at the subsequent temporary distances, so as to create multiple reverse projection images for each of the unit images;

comparing means for comparing the first and subsequent temporary distances based on the temporary reconstructed image and the reverse projection images of the respective unit images on each of the first and subsequent temporary distance planes; and

pixel distance determining means for determining the pixel distance based on the comparison by the comparing means.

3. The three-dimensional object imaging device according to claim 2, wherein the reconstructed image creating means comprises:

high-frequency component unit image creating means for creating multiple high-frequency component unit images by extracting a high-frequency component from each of the multiple unit images;

low-frequency component unit image creating means for creating multiple low-frequency component unit images by extracting a low-frequency component from each of the multiple unit images;

high-frequency component reconstructed image creating means for creating a high-frequency component reconstructed image by rearranging, on the plane located at the pixel distance, the multiple high-frequency component unit images created by the high-frequency component unit image creating means;

image selecting means for selecting a low-frequency component unit image with lower noise from the multiple low-frequency component unit images created by the low-frequency component unit image creating means;

low-frequency component reverse projection image creating means for creating a low-frequency component reverse projection image by reversely projecting pixel-by-pixel the low-frequency component unit image selected by the image selecting means onto the plane located at the pixel distance; and

summing means for summing the high-frequency component reconstructed image created by the high-frequency component reconstructed image creating means with the low-frequency component reverse projection image created by the low-frequency component reverse projection image creating means so as to obtain the reconstructed image.

4. The three-dimensional object imaging device according to claim 1, wherein the reconstructed image creating means comprises:

high-frequency component unit image creating means for creating multiple high-frequency component unit images by extracting a high-frequency component from each of the multiple unit images;

low-frequency component unit image creating means for creating multiple low-frequency component unit images by extracting a low-frequency component from each of the multiple unit images;

high-frequency component reconstructed image creating means for creating a high-frequency component reconstructed image by rearranging, on the plane located at the pixel distance, the multiple high-frequency component unit images created by the high-frequency component unit image creating means;

image selecting means for selecting a low-frequency component unit image with lower noise from the multiple low-frequency component unit images created by the low-frequency component unit image creating means;

low-frequency component reverse projection image creating means for creating a low-frequency component reverse projection image by reversely projecting pixel-by-pixel the low-frequency component unit image selected by the image selecting means onto the plane located at the pixel distance; and

summing means for summing the high-frequency component reconstructed image created by the high-frequency component reconstructed image creating means with the low-frequency component reverse projection image created by the low-frequency component reverse projection image creating means so as to obtain the reconstructed image.

# FIG. 1

# FIG. 2A

# FIG. 2B

# FIG. 3

PROCESS OF CREATING
RECONSTRUCTED IMAGE

S1
OBTAIN UNIT IMAGES

S2
CALCULATE PIXEL
DISTANCE FOR
EACH PIXEL

S3
REARRANGE UNIT IMAGES
PIXEL-BY-PIXEL BASED ON
DISTANCE IMAGE

END

# FIG. 4

PROCESS OF
CALCULATING DISTANCE

S11
SET TEMPORARY DISTANCE Di
(RENEW TEMPORARY DISTANCE Di)

S12
CERATE
RECONSTRUCTED IMAGE

S13
CREATE REVERSE
PROJECTION IMAGES

S14
CALCULATE AND STORE
EVALUATION VALUES

$$SSD(x,y) = \sum_{i=1}^{n}(Ri(x,y) - B(x,y))^{2}$$

S15
COMPLETED
FOR EACH OF TEMPORARY
DISTANCES D1-Dn?

NO

YES

S16
TEMPORARY DISTANCE Di GIVING
MINIMUM EVALUATION VALUE IS
DETERMINED AS PIXEL DISTANCE
FOR EACH PIXEL (x, y)

S17
CREATE DISTANCE IMAGE

END

FIG. 5

RECONSTRUCTED
IMAGE Ad

RECONSTRUCTED
IMAGE Ad1

FIG. 6

g(1, 1)
g(1, 1)

G(1, 1)
g(1, 1)

g(1, 1)

Ad1

## FIG. 7

## FIG. 8

FIG. 9

TEMPORATY DISTANCE Dn

TEMPORATY DISTANCE D1

SSD (x, 1)

SSD (m, n)

SSD (x, y)

SSD (1, 1)

SSD (1, y)

FIG. 10

FIG. 11

FIG. 12

FIG. 13

FIG. 14

# FIG. 15

```
┌─────────────────────────────┐
│   PROCESS OF CREATING       │
│   RECONSTRUCTED IMAGE       │
└─────────────────────────────┘
              │
              ▼                    S21
┌─────────────────────────────┐
│      OBTAIN UNIT IMAGES      │
└─────────────────────────────┘
              │
              ▼                    S22
┌─────────────────────────────┐
│     CALCULATE PIXEL         │
│     DISTANCE FOR            │
│     EACH PIXEL             │
└─────────────────────────────┘
              │
              ▼                    S23
┌─────────────────────────────┐
│   CREATE LOW-FREQUENCY       │
│   COMPONENT UNIT IMAGES      │
└─────────────────────────────┘
              │
              ▼                    S24
┌─────────────────────────────┐
│   CREATE HIGH-FREQUENCY      │
│   COMPONENT UNIT IMAGES      │
└─────────────────────────────┘
              │
              ▼                    S25
┌─────────────────────────────┐
│   CREATE HIGH-FREQUENCY      │
│   COMPONENT RECONSTRUCTED    │
│   IMAGE                     │
└─────────────────────────────┘
              │
              ▼                    S26
┌─────────────────────────────┐
│   SELECT UNIT IMAGE WITH     │
│   LESS NOISE FROM GROUP OF   │
│   LOW-FREQUENCY COMPONENT    │
│   UNIT IMAGES               │
└─────────────────────────────┘
              │
              ▼                    S27
┌─────────────────────────────┐
│   CREATE LOW-FREQUENCY       │
│   COMPONENT REVERSE         │
│   PROJECTION IMAGE          │
└─────────────────────────────┘
              │
              ▼                    S28
┌─────────────────────────────┐
│  SUM HIGH-FREQUENCY COMPONENT│
│  RECONSTRUCTED IMAGE WITH LOW-│
│  FREQUENCY COMPONENT REVERSE │
│  PROJECTION IMAGE           │
└─────────────────────────────┘
              │
              ▼
         ┌─────────┐
         │   END   │
         └─────────┘
```

# FIG. 16

# FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005167484 A
- JP HEI9187038 B
- JP 3575178 B
- JP 2001167276 A